# EUROPEAN PATENT SPECIFICATION

(11) **EP 2 707 334 B1**
(45) Date of publication and mention of the grant of the patent: **25.04.2018**
(21) Application number: 12730065.5
(22) Date of filing: 10.05.2012
(51) Int. Cl.: C02F 3/22, C02F 3/06, C02F 3/12, C02F 3/00

(54) **BIOLOGICAL TREATMENT PROCESS AND INSTALLATION INCLUDING AIR-LIFT AND POST-TREATMENT IN FILTER**
BIOLOGISCHES BEHANDLUNGSVERFAHREN UND ANLAGE MIT AIRLIFT UND NACHBEHANDLUNG IN EINEM FILTER
PROCÉDÉ DE TRAITEMENT BIOLOGIQUE ET INSTALLATION COMPRENANT UN SYSTÈME DE FILTRATION À INJECTION D'AIR ET POST-TRAITEMENT

(30) Priority: 11.05.2011 SK 500232011; 11.05.2011 SK 500602011
(43) Date of publication of application: 19.03.2014
(73) Proprietor: Csefalvay, Juraj, 900 44 Tomasov (SK)
(72) Inventor: Csefalvay, Juraj, 900 44 Tomasov (SK)
(74) Representative: Litváková, Lenka
(86) International application number: PCT/SK2012/050009
(87) International publication number: WO 2012/154135

(56) References cited:
- WO-A2-2010/083149
- GB-A- 1 449 558
- US-A- 3 850 808
- US-A1- 2004 060 862

## Description

### Technical Field

The present invention concerns the device and the method of biological treatment and post-treatment of wastewater, particularly for the individual systems of wastewater treatment.

### Background Art

System of individual wastewater treatment is a method of wastewater disposal from family houses, hotels, small industrial plants and other small, isolated sources at the point of their origin, which is applied mostly in cases when it is not possible to get connected to public sewerage for technical or economical reasons. The aim of the individual systems of wastewater treatment is hygienically and ecologically appropriate method of discharging treated water into surface water or soaking them away to soil, or recycling and re-use of treated water of suitable quality at the place of the origin of the wastewater.

Systems with primary treatment of wastewater mostly consist of septic tank, which provides separation of settleable and floating solids and anaerobic decomposition at the same time. After primary pre-treatment, wastewater contains suspended solids - SS at concentration 50-80 mg/L, BOD5 140-200 mg/L, fecal coliforms 1,000,000 CFU/100 mL, total phosphorus 5-15 mg/L and total nitrogen 40-100 mg/L.

Secondary, or biological treatment of wastewater by aerobic biological process can reduce contamination of wastewater to SS at concentration 15-30 mg/L, BOD5 15-30 mg/L, fecal coliforms 25,000-200,000 CFU/100 mL, total phosphorus 5-15 mg/L and total nitrogen 40-100 mg/L.

Tertiary level or post-treatment level aims at further reduction of contaminants expressed as SS and BOD5, and through disinfection also fecal coliforms and possibly nutrients - total phosphorus and nitrogen, while possible to achieve SS and BOD5 below 10 mg/L, fecal coliforms below 200 CFU/100 mL, phosphorus below 1 mg/L and 60-80% reduction of the total nitrogen.

In many countries, biological, i.e. secondary treatment of wastewater from small sources of pollution is usually a minimum requirement of compliance with legislative regulations. One of the methods of biological treatment of wastewater is the activation process, which is continuous or discontinuous, according to the applied method of discharging. A disadvantage of discontinuous systems is that they represent a burden for the environment of discharging - ground waters or surface waters - during short-term discharge cycles, therefore they are unacceptable in sensitive areas. A disadvantage of conventional continuous systems is their low resistance to variable load, which causes that the sludge is washed out from the system, and deteriorates the parameters of treated water; the sludge which flows away can clog the soak systems for discharge of treated wastewater into ground water.

Individual systems with biological treatment step are primarily designed for removal of organic pollution from wastewater without elimination of nitrogen and phosphorus, which are the cause of excessive growth of algae (algae blooming), and without removal of microbiological contamination, which can cause various illnesses when recycling and re-using treated wastewater. Low stability of treatment efficiency makes recycling and re-use of treated water impossible without further, expensive treatment and increases the load of surface and ground water and clogging of soak systems.

Post-treatment of biologically treated wastewater in order to reduce concentrations of BOD5 and suspended solids can also eliminate microbiological contamination and reduce phosphorus concentration by chemical additives into such extent that the treated wastewater can be also discharged in sensitive areas or re-used.

There are two types of devices for post-treatment of wastewater. The first type comprises devices that employ intense, technological methods using various types of filters, membranes etc., with certain demands on electric energy, eventually requirement of use of chemical additives or machinery for automatic, periodic cleaning and removal of contaminants trapped on the surface and in the filters and membranes.

The other type is represented by extensive devices with lower or no energetic demands, without use of chemical additives and machinery - these devices make it impossible to continuously automatically remove pollutants trapped in the filtration layer, but after specific period of operation, the whole filtration layer must be removed, disposed and replaced, which is expensive.

Despite the undisputable advantages of the extensive devices, technological equipment for post-treatment of wastewater is used more and more as it requires smaller area, its effectiveness can be better guaranteed and controlled, it can better adapt to fluctuating load and overload, its contamination can be removed automatically and continuously, and it achieves similar or better results in the quality of post-treated wastewater than extensive systems; yet it is less sensitive to alternating seasons.

US 3850808A (HOERMANN W) 26 November 1974 shows small-scale installation comprising biological treatment sections, pumping chamber, air-lifting, settling, chlorination and filtration of the effluent and has a reserve volume to accept surge loads without sacrificing treatment efficiency. The suspended solids from the secondary treated effluent is removed by a filter, which consists of a layer of crushed stone, a layer of washed filter sand or small pea stone and a second layer of crushed stone. The secondary effluent flows downward through the filter layers. After prolonged periods of operation, the crushed stone and filter sand will become clogged with settled solids. The captured solids are removed from the filtration layer by backwashing.

GB 1449558A (WALTEC IND TD) 15 September 1976 shows also a small-scale installation comprising biological treatment sections, pumping chamber, air-lifting, settling, chlorination and filtration. Sufficient space is left at the top of the tank to receive shock hydraulic loads and there are holes in the settling acceleration plates for flow equalization. The compact filter bed consists of mixed medium including sand, the effluent from the secondary treatment flows downwards through the filter.

WO 2010/083149A2 (ACCESS BUSINESS GROUP INT LLC [US], KUENNEN ROY W [US], LAUTZENHEISEN) 22 July 2010 teaches about portable water treatment, one described embodiment is using upflow sand filtration with permeable bottom and cleaning procedure of the filtration bed. The filter may be partially regenerated by pumping water through it in direction backwards from the normal flow direction.

US 2004/060862A1 (SAVAGE E STUART [US] ET AL) 1 April 2004 shows also a sand filter for wastewater treatment with permeable bottom, timer and an automated time controlled backwash. The backwashing process is based on air backwashing at least once in 48 hours. The backwashing is in the range of 1 vfm/sq.ft to 10 cfm/sq.ft, i.e. 18,3 m/hr to 183 m/hr, with a preferred rate of air backwash 6 cfm/sq.ft, i.e. 110 m/h. These volumes for backwashing are necessary because a filter is the deep bed filter - bed depth is within a range of approximately 2.0 ft to approximately 10.0 ft. i.e. 61 cm to 305 cm, and the preferred length of time of the backwash is within a range of approximately 3 minutes to approximately 40 minutes.

In US5770081, post-treating device for individual treatment of wastewater for reducing amount of suspended solids in outlet from biological step of treatment and for leveling the alternating flows is described. The apparatus is mounted inside the clarification chamber (may be mounted also behind the clarification chamber) and connected to an outlet pipe and the apparatus includes a cylindrical plant and biologically treated water flows out from final clarification unit through four vertical slots in cylindrical plant on outlet of final clarification zone about 1/16" width, i.e. 1,6 mm and length 23 cm, which gives a rise to formation of retention zone in biological reactor between the minimum and maximum level and controlled overflow flows out. The apparatus is also used for post-treatment of wastewater, because only particles which are smaller than the slots width pass through the slots. Biological growth is formed in the slots and it also suppresses solid substances. After some time of operation, the biological growth on slots slowly grow, respectively get plugged by floating pollutants, water level increases in the whole apparatus, because water can flow out only through the above situated part of slot. The length of slots is proposed due to the availability of sufficient flow area even in the case of gradual plugging between service intervals, i.e. it anticipates gradual overgrowing of slots. Purifying the slots is partly spontaneous, water overflowing through the slots causes "erosion" of clogged places and the part of growth, which is no longer under water after some time, dries and falls off. This method of purifying the filtration unit is uncertain, uncontrollable and can safely remove only particles larger than slot width, and it only solves the removal of suspended and floating substances.

In US6200472B1, The Three Stage Sewage Treatment System (primary, secondary and tertiary) from small sources in one compact apparatus is described. The first step is a pre-treatment tank where the wastewater is left to sediment out until the start of anaerobic processes, activated sludge tank with separation of activated sludge and tertiary step is filtration and chlorination in the third tank. All these tanks are connected into one unit and form a compact apparatus. On the outlet from biological to tertiary step a baffle is fitted, which comprised of two T-joints, so that possible floating contaminants from the surface of separation part do not flow out to tertiary step. Integrated filter with chlorinator is used for removing possible contaminants. The principle of the filter is that the biologically treated water flows out through the baffles, comprised of two T-joints, to a vertical pipe filter on which the slots are formed on the large part of surface. Filter is used to capture floating contaminants that may pass from the biological step. On the top of tubular filter there is also space for chlorine tablet, which disinfects the treated wastewater. The disadvantage of this method is that the filter has to be manually cleaned regularly at least twice a year.

In US4608157A is described the wastewater treatment plant for individual homes which uses activated sludge process, activated sludge zone and final clarification zone is part of the system, filtration unit on outlet from final clarification zone and water level can be at normal and increased level, depending on whether the filtering unit is clogged or not. Final clarification zone is connected by connecting pipe to an overflow chamber, which is also a backwash chamber. Pump, which pumps washed water through filtration fabric is mounted in overflow chamber, and turning on the pump is dependent on a defined level of water in overflow chamber. Emergency slot, through which the wastewater flows when the filtration unit is clogged, is realized in final clarification zone. Tubular filtration system operates with filtration through filtration fabric and tubular filter is placed horizontally at the normal water level, so when the water level rises at higher overflow of incoming waters, it is successively more and more immersed in water and thus increases the filter area. When the filter is clogged, water level rises to a level when it overflows through the emergency outlet and bypass the filter. The disadvantage of this apparatus is that the filtering material is not constantly immersed in water and appropriate conditions for aerobic biological growth cannot be achieved. The effect of filter is only limited to post-treat the waters from gross contaminants and sludge particles. Another disadvantage is that the sludge particles may clog the filtration fabric, because the zone for sedimentation of passing sludge particles is not created and a flow on filtration fabric is not balanced.

In US4021347A is described the apparatus which contains pre-treatment, biological treatment and tertiary treatment of sewage wastewater from small sources of pollution and tertiary treatment comprises of a perforated sheet and a layer of nonwoven plastic fibers. Method of filter backwash is by water under pressure, this method of purifying the filter removes biological growth and thus the effect of filter is small.

One of the known methods of post-treatment of wastewater is filtration through granular material, mostly sand but other granular and fibrous filtrating materials are also known (e.g. zeolite, mineral fibers etc.). Sand filters are well-known equipment for filtration of water and wastewater. Some configurations of sand filters are well-known, such as gravity and pressure filters, slow and rapid sand filters and, depending on the flow direction, sand filter with downward and upward flow. The simplest sand filters are gravity filters with downward flow, which consist of a tank with filtration medium, such as sand, and they have inlet with water under pressure on the top of the tank and filtrated water outlet is located in the lower part of the tank. To remove the trapped contaminants, water under pressure is brought to filtrating bed from the bottom with sufficient speed in order to provide fluidity to the sand layer, so that the sand particles begin to rotate and get free of the mechanical contaminants. After finishing the washing process, the sand layer settles so that gravity causes accumulation of larger particles in the lower part and smaller particles in the top part of the filtration medium column. The upper part of the filter with the smallest sand particles traps the most of contaminating particles. Such filtration system is not suitable for small individual systems for treatment of wastewater because the leaking sludge particles can clog it easily; moreover, it requires equipment for intense sand washing.

According to their flow rate, sand filters are classified into the following categories:
- Standard sand filter with downward flow: filtration rate about 1-4 m/hr;
- Standard rapid sand filter with downward flow: filtration rate about 20-29 m/hr;
- Slow conventional sand filter with filtration rate lower than 0.4 m/hr, non-stratified sand, inactive;
- Rapid pressure sand filter - filtration rate max. 9 m/hr, sand 0.6-1.2 mm

Systems, which do not get clogged too quickly, do not require intensive washing of the filtration layer and are slow, are suitable for the individual systems of treatment, so that appropriate effectiveness can be achieved. These systems have to deal with clogging - colmatation of filtration layer that causes deterioration of porosity and permeability of the system and reduces passage of oxygen. These factors result in reduction of the treatment effectiveness to the total malfunction (clogging) of the post-treatment system.

In US3870633A device for tertiary post-treatment of biologically (secondary) treated wastewater is described. The device contains a surge chamber, which levels alternating flow from biological step of treatment, a sand filter with downward flow and pipe system for flushing the filter. The disadvantage is that leveling of flows is achieved by means of float switches and solenoid valves, which means increased investment and operating costs and the sand filter is flown downwards, which causes the danger of clogging the filter by sedimentation of sludge particles directly on the filtration bed layer.

Upflow filter solutions (e.g. US2007289908A1 or US6406218B1) are known in the field of rain water treatment, where vertical walls are in the bottom part of the filter tank below the grate of filtration medium, which prevent stirring up of the sedimentary sludge. Filter contains also reverse washing self-cleaning mechanism after ceasing rain, namely through a small aperture in the bottom part, where the part of the tank content can flow out spontaneously. Further known solution of upflow filter (filter with upward flow) is solution known from US4141824 in water supply for treatment of raw water into drinking water, where river water is flowed upward through the filter at rate six inches per minute, i.e. about 9 m/hour. Water for cleaning is introduced to the filter through the aperture in the bottom part of the tank below supporting permeable bottom of the filtration bed. Bottom part of the tank below the bottom of filtration bed serves for removal of coarse impurities. Further, the aperture for short-term peak draining of water from filter, which serves for periodical backflushing, is located in the bottom part of the tank. Nevertheless, rain water and raw water from water treatment plant are of different character than sewage wastewater, thus also solution of reverse washing and filter purification requires a different approach in case of sewage wastewater.

It is known from US2004026317A1 that microorganism are trapped mainly in the thin layer of filtration layer, where the thin biological film is formed. Inside the layer microorganism are killed by other bacteria or they are trapped between the sand particles until they cease to live. Raw water must contain sufficient amount of oxygen to allow these processes to occur. Purified wastewater from process of activated sludge can also contain particles of activated sludge, smaller or larger, which can clog pores in infiltration soil or clog apertures of irrigation systems. In such case conventional technologies use addition of chemicals for coagulation and flocculation before filtration. Large particles are formed from small ones by chemicals, and they are trapped easily in the layer of filtration material. Chemicals produce chemical sludge, which can clog pores of filter and cause higher cost of post-treatment and need of frequent cycles of washing. Therefore, in US2004026317A1 tertiary post-treatment by filtration is used after biological treatment by activation process without need of dosage of chemicals, wherein ability of activated sludge particles in small amount to initiate flocculation of suspended solids present in purified water before filtration is used, improving efficiency of filtration and decreasing amount of suspended solids in purified water after post-treatment step. In addition, active layer is formed on the surface of filter by a small amount of activated sludge in front of the filter, which improves the characteristics of the water filtered by biological processes which take place in such a layer.

### General Knowledge of the Background Art and Need for Improvement of the Present State:

Technological equipment such as sand or zeolite slow or pressure filters, membrane filtration, with or without dosing chemical additives, or passive equipment such as various types of soil filters, vertical sand filters, wetland vegetation plants for post-treatment, etc is mostly used for tertiary post-treatment of wastewater for domestic wastewater treatment devices and small wastewater treatment plants. Conventional sand filters and other filters with granular or fibrous filtration materials are subject of clogging if used in domestic wastewater treatment plants because of financial reasons it is impossible to use the commonly used backflushing methods, which are technologically complex with high failure rate, requiring frequent maintenance; another issue is the widely fluctuations in production of wastewater - for this reason they have to be over-sized and therefore are usually not applied. Membrane filtration devices have advantage in being able to eliminate microbial contamination with no addition of chemicals, these devices, in so-called membrane activated form, are used recently also in domestic wastewater treatment plants, but they are relatively expensive and their operation and maintenance is more complicated and expensive too. Most frequently, passive, extensive systems are used for post-treatment of biologically treated wastewater, which are not technologically demanding in terms of their equipment and maintenance, they integrate well into natural ecosystems, but they are spatially demanding, especially if they should accept load fluctuations.

Aim of the present invention is to improve sand filtration for use in individual systems so that the filter becomes practically maintenance-free, with automatic backflushing, in order to eliminate the clogging of the filter and the effectiveness of the filter approaches or surpasses that of membrane filtration devices. This would provide results in treatment of wastewater comparable to that of membrane devices, but at significantly lower costs of purchasing, operation and maintenance.

### Nature of Invention

The aforementioned objective is solved and the drawbacks of known devices for biological treatment of wastewater and method of biological treatment and post-treatment of treated wastewater are substantially eliminated by the device for biological treatment and post-treatment of biologically treated wastewater and the method of biological treatment and post-treatment of wastewater according to the present invention. The device for biological treatment and post-treatment of biologically treated wastewater contains biological reactor for biological treatment of wastewater using a system with activated sludge and filtration device for post-treatment of biologically treated wastewater. The nature of the technical solution is that the filtration device contains a pumping chamber, sedimentation zone and filtration zone with filtration bed, and with accumulation zone for post-treated water located between the upper level of the filtration bed and outlet of the filtration zone. The inlet for biologically treated wastewater from biological reactor is in the sedimentation zone below the permeable bottom of the filtration bed and in preferred embodiment; it can serve as outlet for wastewater and sludge from the backflushing of sedimentation and filtration zone. This aperture is connected, through connecting pipe, to the pumping chamber with suction aperture of the pumping device at the bottom of the pumping chamber and outlet of the pressure pipe from the pumping device leads to the biological reactor.

From the point of effectiveness of flushing the sedimentation zone, it is relevant that the filtration device contains a water storage zone, which is connected with the sedimentation zone through an aperture, wherein the sedimentation zone and the storage zone are being dedicated to the biologically treated wastewater and the filtration zone is dedicated to post-treated wastewater.

From the point of operational costs of maintenance and minimization of failure rate of the device, it is essential that the biologically treated wastewater from the biological reactor is brought to the zone of the filtration device below the filtration bed, where the sedimentation zone is created below the filtration bed area so that during slow rising of water upwards through a large area of the filtration bed, large particles of activated sludge can settle in the zone below the filtration bed under appropriate conditions, when the drag force of rising water is lower than the settling velocity of large sludge particles, while the small particles of activated sludge can agglomerate into larger ones and settle on the bottom of the sedimentation zone like large particles either due to the natural coagulating effect of activated sludge or with the help of dosed chemical agents before the entry to the sedimentation zone.

Device for biological treatment and post-treatment of wastewater in preferred embodiment has an integrated retention zone created in the biological reactor that serves for balancing and retention of fluctuating flow rate using the throttle aperture of the flow regulator at the outlet of the biological reactor.

From the point of filtration effectiveness and the size of filtration bed area, it is important that the throttling of the biological reactor outlet and the use of integrated retention zone for elimination of short-term peak flow of wastewater as well as for accumulation of wastewater originating from backflushing of filtration device in the retention zone of the biological reactor achieves slow, balanced flow of biologically treated wastewater into the filtration device, which means saving of filtration area while preserving the maximum load of filtration layer in the range of slow filtration of 0.2-0.4 m/hr and reduction of dosage and consumption of coagulants, while the balanced flow of biologically treated water does not swirl the settled sludge at the bottom of the pumping chamber and sedimentation zone of the filtration device.

Preferably, the inlet and outlet for wastewater and sludge from the backflushing of sedimentation and filtration zone is the same opening.

From the point of protection of the filtration bed from its clogging from the side of sedimentation zone below the filtration bed, it is preferable, if the permeable bottom of the filtration bed is made of thin stainless metal sheet perforated all over with mesh diameter 0.3-0.6 mm, with smooth surface that retains floating particles of activated sludge in the sedimentation zone and prevents clogging of the filtration bed, while possible biological growth around the mesh in the metal sheet loosens easily in course of backflushing the filtration bed.

In preferred embodiment, the height of sedimentation zone under permeable bottom of the filtration bed is ranging in 10-15 cm.

From the point of effective flushing of the sedimentation zone of filtration device, small height of sedimentation zone is preferred, e.g. 10-15 cm, for better flushing of settled sludge, where the possibility of frequent activation of backflushing during day enables designing this zone with lower volume, because it is not necessary to consider any accumulation of sludge on the bottom of the sedimentation zone. Because the sludge does not remain for long in the sedimentation zone, anaerobic processes do not occur, layer of settled sludge does not harden on the bottom and it can be removed easily from the bottom during the backflushing.

Preferably, the filtration bed is made of quartz sand with particle size 0.3-0.8 mm, with maximum height of filtration bed 30 cm and the area of filtration bed is derived from the filtration rate of sand filter 0.2-0.4 m/hr.

From the point of effectiveness of the device for post-treatment of wastewater, it is important that the layer of filtration material is not higher than about 30 cm, optimally 15 cm, which means that appropriately low layer of sand and using residual dissolved oxygen in biologically treated wastewater and residual content of nitrates as chemical source of oxygen, oxic conditions in whole layer of filtration material are preserved, which provides favorable conditions for biological growth of aerobic bacteria, which prefer the presence of oxygen for their growth, and unfavorable conditions for growth of anaerobic biological growth, which could clog the filtration layer. The activated sludge trapped among grains of sand is continuously consumed by aerobic microorganisms, which reproduce more rapidly at higher supply of organic matter, wherein no anaerobic processes occurs which could result in clogging of filtration bed, because frequent backflushing and low height of filtration material layer do not enable such processes, wherein aerobic microbial growth is also effective in elimination of pathogenic microorganism, which allows water recycling with no chemical additives.

Preferably, sand is used as filtration medium for disinfection of biologically treated water by chlorine reagent, as during rising through filtration bed made of fine sand, the excessive chlorine in biologically treated water is extensively removed on the surface of sand grains, where bubbles of gaseous chlorine are released, thereby reducing the chlorine content in post-treated water above the filtration bed, which is preferred in use of such disinfected water for irrigation of amenity greenery in water recycling.

Preferably, quartz sand with particle size of 0.3-0.8 mm is used as filtration material, which is durable, inexpensive, due to the method of backflushing it does not escape during the rinsing and it can be easily rinsed by stream of water.

Filtration device can be arranged inside a biological reactor or it can be placed in a separate tank, which is connected behind a biological reactor, for example in the way shown in the examples of embodiment.

From the point of operational costs of maintenance and minimization of failure rate of device, it is important that the backflushing of the filtration device is automatically performed several times a day in short periods, and thus the filtration device has high self-cleaning capacity, due to its structure and multiple automatic backflushing, and requires practically no maintenance or replacing of the filtration material. The filtration device is capable of continuous and spontaneous self-cleaning even in case of greater sludge outflow from the biological step during enormous hydraulic load of the biological reactor, because repeated backflushing gradually treats the filtration device from the excessive sludge settled in the sedimentation zone of the filtration device located below the filtration bed.

From the point of effectiveness of the device for post-treatment of wastewater, it is important that the backflushing of the filtration bed is performed by slow reverse flow of post-treated water through a layer of filtration material downwards by gravity so that in the lower pumping chamber that is hydraulically connected with the filtration chamber, thus they form communicating vessels, water level drops by action of pumping device, which also causes falling of water level in the filtration zone, wherein this flushing has to be triggered several times a day for short periods, which is friendly way of biological regeneration of the filtration bed that provides a significant part of post-treatment processes of wastewater, and thereby the reverse washing helps to provide balance between beneficial living organisms trapped in the filtration bed and over-growth of biological regeneration that could clog the filtration layer.

From the point of effectiveness of the backflushing, it is essential that biologically treated water from the biological reactor is brought to the sedimentation zone of the filtration device at balanced flow rate, lower than the flow rate of pumping wastewater from backflushing by the pumping device, because this way the pumped amount of water and sludge from backflushing accumulates during the short reverse washing cycle in the retention zone of the biological reactor and it slowly flows into pumping chamber through the throttle aperture of the flow regulator, thereby allowing the water and sludge from the backflushing to flow freely, by gravity, from the sedimentation zone, filtration zone and storage zone of the filter into the pumping chamber.

Preferably, disinfection of biologically treated water is provided by slowly dissolving pastilles containing chlorine-based disinfectant before the entry into the sedimentation zone of the filtration device, which extensively eliminates pathogenic microorganisms, thereby allowing safe recycling of the water.

Preferably, above the filtration sand layer, there is always a layer of treated water in the accumulation zone for post-treated water, the height of which is determined by the bottom of the filtration device outlet, which prevents drying out and cracking of the filter surface even at the times of zero inflow. The height of the layer can vary; it can possibly allow installation of suction pump for tertiary treated water for further use of the treated water. Accumulation zone for post-treated water can serve as a reservoir for water recycling, e.g. for toilet flushing.

The present invention improves sand filtration for use in individual systems for treatment of wastewater so that the sand filter becomes practically maintenance-free, with automatic backflushing, the clogging of the filter is eliminated and the effectiveness of the filter approaches or surpasses the effectiveness of membrane filtration devices. This provides that results in treatment of wastewater are comparable to that of membrane devices, but at significantly lower purchase, operation and maintenance costs.

The invention is defined by the appended claims.

### Overview of Figures in the Drawings

The nature of the invention is further clarified in examples of its embodiment, which are described based on the attached drawings showing the following:
- Fig. 1 a,: Biological reactor and filtration device integrated in a device for biological treatment and post-treatment of wastewater (example 1).
- Fig. 2 a, b: Device for biological treatment and post-treatment of wastewater, where the filtration device is set up in a separate tank behind the biological reactor (example 2).
- Fig. 3: Device for biological treatment and post-treatment of wastewater, where the filtration device is set up in a separate tank that is attached to the biological reactor (example 3).

### Examples of Embodiment of Invention

### Example 1

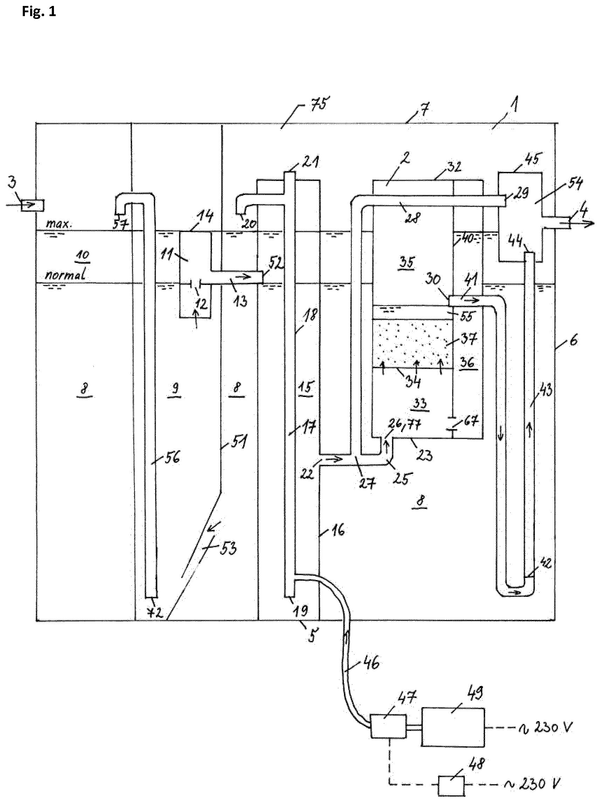

The Fig. 1 shows a device for biological treatment and post-treatment of wastewater 75 for family house, which consists of biological reactor 1 for biological treatment of wastewater using a system with activated sludge and filtration device 2 for post-treatment of biologically treated wastewater, wherein the biological reactor 1 and the filtration device 2 are integrated into a device for biological treatment and post-treatment of wastewater 75.

The device for biological treatment and post-treatment of wastewater 75 has inlet 3, outlet 4, bottom 5, housing 6 and a detachable cover 7. The inlet 3 of the device 75 also serves as the inlet of the biological reactor 1. The biological reactor 1 contains an activation zone 8 and a final clarification zone 9. The activation zone 8 and the final clarification zone 9 have hydraulic connection via an aperture 53. At the bottom of the final clarification zone 9, there is a suction aperture 72 of an air-lift pump 56 for pumping of settled activated sludge through a discharge aperture 57 of the air-lift pump 56 into the activation zone 8. The biological reactor 1 contains integrated retention zone 10 for accumulation of the excess wastewater at peak loads from the family house and wastewater from backflushing of the filtration device 2 between normal and maximum operating water levels in the biological reactor 1. The final clarification zone 9 of the biological reactor 1 contains a flow regulator 11 with a throttle aperture 12 at normal operating water level on outlet pipe 13 from the final clarification zone 9. The flow regulator 11 contains an aperture 14 for emergency discharge of biologically treated wastewater at the maximum operating water level in the biological reactor 1. Outlet pipe 13 from the final clarification zone 9 leads into a pumping chamber 15 of the filtration device 2.

Filtration device 2 has inlet 52, outlet 30 and contains a pumping chamber 15 and a sedimentation zone 33 and a filtration zone 35.

The pumping chamber 15 is embedded in the activation zone 8 of the biological reactor 1 in form of a vertical pipe 16 fixed firmly to the bottom 5 of the biological reactor 1, so that the circular area defined by the contact of the pipe 16 and the bottom 5 of the biological reactor 1 also serves as the bottom of the pumping chamber 15. Water level in the pumping chamber 15 is the same as the water level in the biological reactor 1 during the treatment process. Inside the pumping chamber 15 is an air-lift pump 17, a suction aperture 19 of which is located at the bottom of the pumping chamber 15 and outlet 20 of the pipe 16 of the air-lift pump 17 is located above the maximum operating water level in the activation zone 8 of the biological reactor 1. Pipe of the air-lift pump 17 ends with an air vent hole 21. Pipe 16 of the pumping chamber 15 contains an outlet 22, which is connected to a connecting pipe 25 between the pumping chamber 15 and the bottom 23 of sedimentation zone 33. The connecting pipe 25 is connected to the inlet 26 into sedimentation zone 33 through its bottom 23 and ends below the permeable bottom 34 of the filtration bed 37. Inlet 26 of biologically treated wastewater also serves as the outlet 77 for water and sludge from backflushing of filtration device 2. Through the aperture 27, a bypass pipe 28 leads into the connecting pipe 25 between the pumping chamber 15 and bottom 23 of sedimentation zone 33. The outlet 29 of the bypass pipe 28 is located above the maximum operating water level of the biological reactor 1 and it leads into sampling point 54.. Above the permeable bottom 34, the filtration zone 35 contains filtration bed 37 that is made of free-poured layer of quartz sand with particle size 0.6 - 0.8 mm; the height of the filtration bed 37 is 15 cm. The surface area of the filtration bed 37 has dimensions corresponding to the design filtration rate 0.2-0.4 m/hr for slow filtration. The permeable bottom 34 is made of perforated stainless metal sheet with mesh diameter 0.4 - 0.5 mm. Height of the sedimentation zone 33 between the bottom 23 and the permeable bottom 34 is 10 cm. The storage zone 36 for biologically treated water is separated from the filtration zone 35 by a separating wall 40 and in its lower part, it is hydraulically connected to the sedimentation zone 33 through an aperture 67 at the bottom 23 of the sedimentation zone 33. Water level in the storage zone 36 for biologically treated water is the same as the water level in the biological reactor 1 during the treatment process. Accumulation zone for post-treated water 55 is located between the normal operating level of post-treated water in the filtration zone 35 and the upper level of the filtration bed 37. Water level in the accumulation zone for post-treated water 55 is determined by the lower edge of the outlet 30 of the filtration zone 35 during the treatment process. Between the normal operating level of post-treated water in the accumulation zone for post-treated water 55 and normal operating water level in the biological reactor 1, there is about 10 cm elevation head, which is sufficient for creating hydrostatic pressure for gravitational flow of water through the filtration bed 37. The outlet 30 of the outlet pipe 41 of the filtration zone 35 is connected to a suction outlet 42 of the air-lift pump for post-treated wastewater 43, with outlet 44 leading into the sampling point 54. The outlet 4 from the device 75 for biological treatment and post-treatment of wastewater contains sampling point 54 with sampling aperture 45 for sampling of discharged wastewater. On inlet pipe of pressure air 46 into the air-lift pump 17 in the pumping chamber 15, a magnetic valve 47 is located, that is controlled by time switch 48 with adjustable interval of opening and closing. Air blower 49 is the source of pressure air for powering the air-lift pumps 17, 43, 56 as well as aerating the activation zone 8. After opening the detachable cover 7 of the device 75 for biological treatment and post-treatment of wastewater and subsequently the cover 32 of the filtration zone 35, it is possible to replace or rinse the filtration bed 37. Wastewater from the family house is supplied through the inlet 3 for raw wastewater into the device 75 for biological treatment and post-treatment of wastewater and into the biological reactor 1. In the biological reactor 1, biological treatment occurs using the system with activated sludge in the activation zone 8; mixture of activated sludge and wastewater flows through the aperture 53 of the housing 51 into the final clarification zone 9; in the final clarification zone 9, biologically treated water is separated from the activated sludge which sinks to the bottom and then is recycled into the treatment process by the air-lift pump 56. The final clarification zone 9 is fitted with flow regulator 11, which by means of the throttle aperture 12 on the outlet pipe 13 of the final clarification zone 9 prevents the outflow of biologically treated wastewater at the flow rate equal to the flow rate of incoming wastewater from the family house and wastewater and sludge from backflushing of the filtration device 2 into the biological reactor 1; the accumulated amount of wastewater stays in the retention zone 10 of the biological reactor 1, which is formed between normal and maximum operating levels in the biological reactor 1. Biologically treated wastewater with balanced flow rate flows from the final clarification zone 9 by gravity through the inlet 52 of the filtration device 2 into the pumping chamber 15, where larger, heavier suspended solid particles go down at the bottom and the biologically treated wastewater with smaller suspended solid particles ascends, due to hydrostatic pressure, caused by different water levels in the biological reactor 1 and in the filtration zone 35 of the filtration device 2, through the connecting pipe 25 into the sedimentation zone 33 below the permeable bottom 34 of the filtration bed 37. In the sedimentation zone 33, small suspended solid particles aggregate into larger particles and go down at the bottom, while the biologically treated wastewater without the settled particles slowly ascends due to hydrostatic pressure through the permeable bottom 34 upward through the filtration bed 37. After certain period of operation of the device for biological treatment of wastewater and post-treatment of biologically treated wastewater 75, a biological film on the surface and inside the filtration bed 37 is formed - a growth consisting of bacteria that feed on organic substances trapped inside the filtration bed 37 and eliminate pathogenic germs or microbial pollution of biologically treated wastewater. The filtration bed 37 provides ideal conditions for the growth of these bacteria, as the filtration material is permanently immersed in water, does not dry up and its surface does not crack due to preservation of post-treated water layer in the accumulation zone for post-treated water 55 above the filtration bed 37, biologically treated water contains residual dissolved oxygen from the activation process or residual amount of nitrates that provide chemical source of oxygen, thereby preventing the anaerobic processes in the filtration bed 37 and reproduction of anaerobic bacteria that could clog the filtration bed 37. At the same time, microbial populations of the filtration bed 37 are kept in balance by frequent, short periodic backflushing. Post-treated wastewater is collected above the filtration bed 37 in the accumulation zone for post-treated water 55 between the normal operating level of post-treated water determined by the outlet 30 of the outlet pipe 41 and the upper level of the filtration bed 37, while the post-treated wastewater is pumped from the filtration zone 35 by the air-lift pump for post-treated wastewater 43 through the outlet 44 of the air-lift pump 43 into the outlet pipe 4 through the sampling point 54 into the outlet of the device 75 for biological treatment and post-treatment of wastewater.

In case that the accumulation zone 10 between normal and maximum operating levels of the biological reactor 1 is not sufficient to temporarily retain the incoming wastewater, biologically treated water flows through the aperture 14 for emergency discharge of the flow regulator 11 through the pumping chamber 15 into the sedimentation zone 33. If the filtration bed 37 gets critically clogged, the biologically treated water rises in the vertical bypass pipe 28 and flows into the outlet 4 from the device 75 for biological treatment and post-treatment of wastewater through the sampling point 54.

The backflushing of the filtration device 2, which is triggered by controlling the magnetic valve 47 on the air pipe 46 leading to the air-lift pump 17 in the pumping chamber 15, serves to prevent clogging of the filtration bed 37. The time switch 48 has time intervals set up for closing and opening of the magnetic valve 47, for example the interval of the closed state is set to 1.5 hours, interval of the opened state is set to 10 seconds and these time sequences alternate throughout the day.

The backflushing also serves for cleaning of the sedimentation zone 33 from sludge deposits. Mechanism of the backflushing is such that the time switch 48 causes opening of the magnetic valve 47, which starts operation of the air-lift pump 17 in the pumping chamber 15; the suction effect of the air-lift pump 17 causes fall of the water level in the pumping chamber 15 to the level below the outlet 22, which is linked through the connecting pipe 25 to the outlet 77 in the sedimentation zone 33, resulting in gravitational flow of water from the filtration zone 35 and the storage zone 36 downward, while falling more slowly in the filtration zone 35 through the filtration material layer and falling more rapidly in the storage zone for biologically treated water 36. Slowly falling water causes mild backflushing of the sand layer, which only washes out from the filtration bed 37 the dead remains of bacteria and excessive accumulated biological material and contaminants trapped between sand grains through the permeable bottom 34 of filtration bed 37 into the sedimentation zone 33. Rapidly falling water level in the storage zone 36 causes rapid flushing of the whole sedimentation zone 33 and subsequent removal of settled sludge and sludge from backflushing of the filtration chamber 35, wastewater and sludge from the backflushing meander through the outlet 77 through the connecting pipe 25 into the pumping chamber 15, from where the wastewater and sludge from backflushing are pumped into the activation zone 8 of the biological reactor 1 by the air-lift pump 17. The backflushing of the filtration device 2 lasts only ten seconds but it is repeated several times a day. By this way, it is achieved that the filtration bed 37 is permanently automatically backwashed by post-treated wastewater and the sedimentation zone 33 is flushed by biologically treated wastewater. Wastewater from the backflushing is pumped into the activation zone 8 of the biological reactor 1, where it appears as an inflow into the final clarification zone 9 through the aperture 53. Flow regulator 11 in the final clarification zone 9 prevents rapid outflow of water from the final clarification zone 9 into the pumping chamber 15 and into the sedimentation zone 33, thereby achieving effective backflushing, because the flow rate of wastewater from the backflushing, being pumped from the pumping chamber 15 into the activation zone 8 and then into the final clarification zone 9, is higher than the flow rate of biologically treated wastewater from the final clarification zone 9 into the pumping chamber 15.

### Example 2

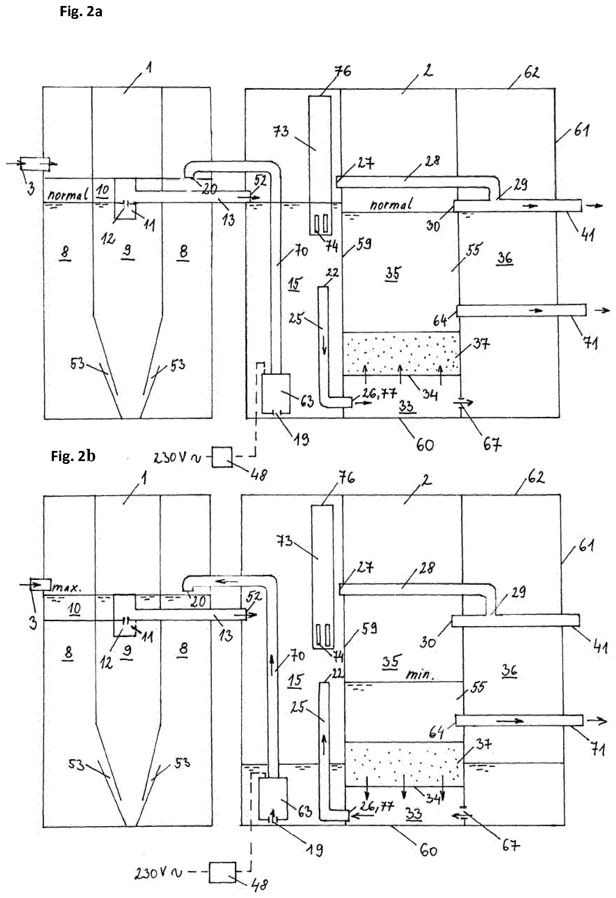

The Fig. 2a, 2b shows a device for biological treatment and post-treatment of wastewater 75 for family house, which consists of biological reactor 1 for biological treatment of wastewater using a system with activated sludge and filtration device 2 for post-treatment of biologically treated wastewater, wherein the filtration device 2 is set up in a separate tank behind the biological reactor 1.

Outlet pipe 13 from final clarification zone 9 leads into a pumping chamber 15 of the filtration device 2.

Filtration device 2 has inlet 52, outlet 30, bottom 60, housing 61 and a detachable cover 62. The tank of the filtration device 2 has cylindrical shape. The filtration device 2 is divided by a vertical separating wall 59 into a pumping chamber 15, sedimentation zone 33 and filtration zone 35, wherein the bottom 60 of the filtration device 2 also serves as the bottom of the sedimentation zone 33 and the pumping chamber 15. The pumping chamber 15 contains an immersion sludge pump 63 the suction aperture 19 of which is located at the bottom of the pumping chamber 15 and outlet 20 of the pressure pipe 70 of the immersion sludge pump 63 is located above the maximum operating water level in the activation zone 8 of the biological reactor 1. The pumping chamber 15 and the sedimentation zone 33 are hydraulically connected through a connecting pipe 25. Outlet 22 of the connecting pipe 25 in the pumping chamber 15 is located at the minimum operating level of post-treated water in the filtration zone 35. The connecting pipe 25 is connected to inlet 26 into the sedimentation zone 33 through the separating wall 59 at the bottom 60 of the filtration device 2 below the permeable bottom 34 of the filtration bed 37. Inlet 26 of biologically treated wastewater also serves as the outlet 77 for water and sludge from backflushing of the filtration device 2. A bypass pipe 28 leads through its inlet aperture 27 into the pumping chamber 15; the outlet 29 of bypass pipe 28 leads into the outlet pipe 41 from the filtration device 2. Above the filtration bed 37 lies the accumulation zone for post-treated water 55, which also serves as the reservoir of post-treated water for pump serving as outlet for treated water used for example for toilet flushing, irrigation of amenity greenery and likewise, not shown in the Fig. 2a, 2b which has the suction aperture 64 of the suction pipe 71 located in the accumulation zone 55 for post-treated water. Operation of the pump 63 is controlled by time switch 48 with adjustable switching on and off interval. After opening of the detachable cover 62 of the filtration device 2, it is possible to replace or rinse the filtration bed 37. The filtration device 2 can be additionally installed behind the biological reactor 1.

In the Fig. 2a, apparatus for biological treatment and post-treatment of wastewater 75 during the stage of filtration is shown, in the Fig. 2b the apparatus is shown during the stage of backflushing.

The pumping chamber 15 may contain dosing device for chemical agent 73 in the shape of vertical pipe with a lid 76 and apertures 74 in its lower part. The dosing device 73 contains slowly soluble pastilles containing chlorine as disinfectant.

The post-treated wastewater is accumulated above the filtration bed 37. Normal operating level of water in the filtration zone 35 is determined by the outlet 30 of the outlet pipe 41 from filtration zone 35 through which flows the post-treated wastewater by gravity flow from the tank 58 of the filtration device 2. Minimum operating level in the filtration zone 35 is determined by the outlet 22 of the connecting pipe 25 in pumping chamber 15 through which flows the wastewater from backflushing. In the filtration zone 35 retains in the accumulation zone for post-treated water 55 between the normal and minimum operating levels sufficient amount of water for recycling, e.g. for flushing toilet or for irrigation of greenery, even after running backflushing of the filtration device 2.

To prevent clogging of the filtration bed 37, repeated backflushing of the filtration device 2 is triggered by controlling the pump 63 in the pumping chamber 15. The time switch 48 has time intervals set up for switching on and off of the pump 63, e.g. the idle interval is set to 1.5 hours, the running interval is set to 10 seconds and these time sequences alternate throughout the day.

The backflushing also serves for cleaning of the sedimentation zone 33 from sludge deposits. Mechanism of the backflushing is such that the time switch 48 triggers the pump 63 in the pumping chamber 15, the suction effect of the pump 63 causes fall of the water level in the pumping chamber 15, which is linked through the connecting pipe 25 to the outlet 77 in the sedimentation zone 33. When the water level in the pumping chamber 15 falls below the outlet 22, due to the elevation head between the pumping chamber 15 and the filtration zone 35 or the storage zone 36 of biologically treated water, the water starts flowing by gravity from the filtration zone 35 and the storage zone 36 downwards, falling more slowly in the filtration zone 35 through the layer of filtration material, while falling more rapidly in the storage zone for biologically treated water 36. Wastewater from backflushing flows through the outlet 77 in sedimentation zone 33 and through the connecting pipe 25 into the pumping chamber 15, from which it is pumped into the activation zone 8 of the biological reactor 1 by the pump 63.

### Example 3

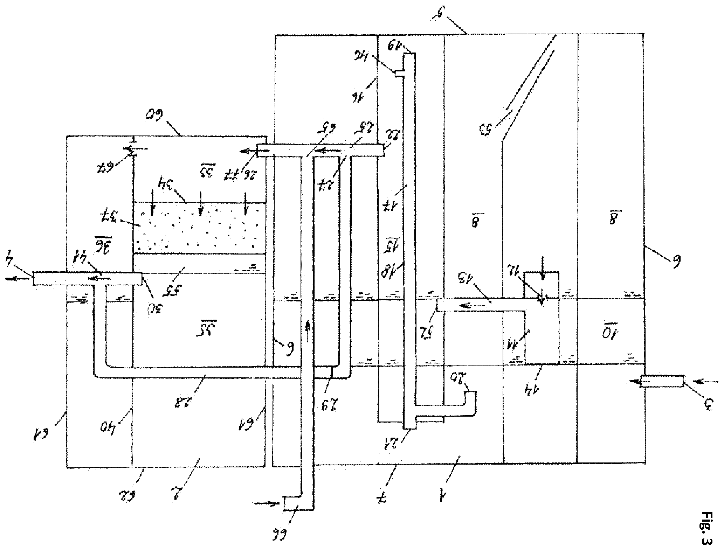

The Fig. 3 shows a device for biological treatment and post-treatment of wastewater 75 for family house, which consists of biological reactor 1 for biological treatment of wastewater using a system with activated sludge and filtration device 2 for post-treatment of biologically treated wastewater, wherein the filtration device 2 is set up in a separate tank that is attached to the tank of the biological reactor 1 and thereby form a single assembly.

Outlet pipe 13 from final clarification zone 9 leads into pumping chamber 15 of the filtration device 2.

Filtration device 2 has inlet 52, outlet 30 and contains pumping chamber 15, sedimentation zone 33 and filtration zone 35. Pumping chamber 15 is embedded in the activation zone 8 of the biological reactor 1 in form of a vertical pipe 16 fixed to the bottom 5 of the biological reactor 1. The pumping chamber 15 contains an air-lift pump 17 with suction aperture 19 located at the bottom of the pumping chamber 15 and outlet 20 of the air-lift pump 17 is located above the maximum operating water level in the activation zone 8 of the biological reactor 1 and is ended with an air vent 21. Pipe 16 of the pumping chamber 15 contains an outlet 22, which is connected to a connecting pipe 25 between the pumping chamber 15 and the sedimentation zone 33. The connecting pipe 25 is connected to the inlet 26 into the sedimentation zone 33 below the permeable bottom 34 of the filtration bed 37. Inlet 26 of biologically treated water also serves as the outlet 77 for water and sludge from backflushing of the filtration device 2. Dosing of chemical agent solution, for example for removal of phosphorus, leads into the connecting pipe 25, through inlet 65 of dosing pipe 66 for the chemical agent. Dosing of the liquid chemical agent can also be provided by leading the dosing pipe 66 into the pumping chamber 15 or into the final clarification zone 9.

### Industrial Use

The device and the method of biological treatment and post-treatment of wastewater according to the present invention can be used for treatment of wastewater and its recycling from small, isolated sources of pollution, particularly for decentralized solution of wastewater treatment. Quality of treated water meets strict criteria of nitrogen and phosphorus removal from the wastewater, sanitation of wastewater including the removal of viruses, therefore such treatment devices can also be used for discharging to surface water in sensitive areas, where risk of eutrophication of surface water exists, for discharging to surface waters suitable for relax and swimming and for discharging to ground waters, or the treated water can be used for flushing toilets, irrigation, washing the laundry, car washing, etc.

## Claims

1. Device for biological treatment and post-treatment of wastewater and wastewater disposal from isolated sources at the point of origin containing a biological reactor (1) for biological treatment of wastewater and a filtration device (2) for post- treatment of biologically treated wastewater whereby the filtration device (2) contains a pumping chamber (15) and a sedimentation zone (33), a filtration zone (35) with a filtration bed (37) with permeable bottom and with the accumulation zone (55) for post-treated water located between the upper level of the filtration bed (37) and the outlet (30) from filtration zone (35);
the inlet (26) for biologically treated wastewater from the biological reactor (1) and the outlet (77) serving for discharging wastewater and sludge from back-flushing of the filtration zone (35) and the sedimentation zone (33) are located in the sedimentation zone (33) below the permeable bottom (34) of the filtration bed (37); the maximum height of the filtration bed is 30 cm;
the outlet (77) is connected through the connecting pipe (25) to the pumping chamber (15) with suction aperture (19) of a pumping device (17, 63) at the bottom of the pumping chamber (15) and the outlet (20) of the pressure pipe (18,70) from the pumping device (17,63) being led into the biological reactor (1), wherein
the biological reactor (1) contains an integrated retention zone (10) for balancing and retention of fluctuating flow rates using a throttle aperture (12) of the flow regulator (11) at the outlet pipe (13) of the biological reactor (1), and wherein
the filtration device (2) contains a water storage zone (36), which is connected with the sedimentation zone (33) via an aperture (67), wherein the sedimentation zone (33) and the water storage zone (36) are being dedicated to biologically treated wastewater and the filtration zone (35) is being dedicated to post-treated wastewater.

2. Device for biological treatment and post-treatment of wastewater according to claim 1 wherein a common aperture serves as both inlet (26) and outlet (77) for draining wastewater and sludge from back-flushing of the sedimentation zone (33) and the filtration zone (35).

3. Device for biological treatment and post-treatment of wastewater according to claims 1 or 2 wherein permeable bottom (34) of the filtration bed (37) is formed by perforated stainless metal sheet with mesh diameter ranging in 0.3-0.8 mm.

4. Device for biological treatment and post-treatment of wastewater according to claims 1 to 3 wherein the height of sedimentation zone (33) between the bottom (60, 23) and the permeable bottom (34) of the filtration bed (37) is ranging in 10-15 cm.

5. Device for biological treatment and post-treatment of wastewater according to claims 1 to 4 wherein the filtration bed (37) is made of sand with grain size of 0.3-0.8 mm and size of the area of filtration bed (37) is derived from the filtration rate of sand filter ranging in 0.2-0.4 m/hr.

6. Device for biological treatment and post-treatment of wastewater according to claims 1 to 5 wherein the filtration device (2) is set up inside a biological reactor (1) or the filtration device (2) is located in a separate tank with side walls (61), bottom (60) and cover (62).

7. Method of biological treatment and post-treatment of wastewater employing a device as defined by claims 1-6 such that the raw wastewater is biologically treated in biological reactor (1), biologically treated wastewater is separated from the activated sludge and the biologically treated wastewater is subsequently treated in the tertiary, posttreatment step of treatment - in filtration device (2)
whereby during the filtration, biologically treated water without settled particles slowly ascends due to hydrostatic pressure of the elevation head between the water level inside the biological reactor (1) and the water level inside the filtration zone (35) through the permeable bottom (34) of the filtration bed (37) upward through the filtration bed (37) with filtration material and cleaning of the filtration bed (37) with parallel keeping of microbial populations of the filtration bed (37) in balance is provided by repeated back-flushing with frequent activation of back-flushing during day and the rinsing mechanism is such that a pumping device (17, 63) is repeatedly triggered and is connected to an inlet (26) of the sedimentation zone (33) and, due to hydrostatic pressure, the water level in the filtration zone (35) starts falling through the filtration bed (37);
the slowly falling water in the filtration bed (37) washes out the dead remains of bacteria and trapped contaminants from the filtration bed (37) through the permeable bottom (34) of the filtration bed (37) into the sedimentation zone (33) and then into the pumping chamber (15), and wherein
during the back-flushing, the water level falls more slowly through the filtration bed (37) while falling more rapidly in the storage zone (36); the slowly falling water in the filtration bed (37) provides mild back-flushing of the filtration bed (37) while the rapidly falling water level in the storage zone (36) causes rapid flushing of the sedimentation zone (33) and thereby removes settled sludge and sludge from the back-flushing into the pumping chamber (15).

8. Method of biological treatment and post-treatment of wastewater according to claim 7 wherein the biologically treated water from biological reactor (1) flows into the sedimentation zone (33) at balanced flow rate, which is lower than the flow rate of pumping wastewater and sludge from back-flushing of the filtration device (2) by the pumping device (17, 63).

9. Method of biological treatment and post-treatment of wastewater according to claims 7 or 8 wherein before the post-treatment of the biologically treated wastewater, the biologically treated wastewater flowing into the sedimentation zone (33) is physically and chemically processed or chemically processed.

## Patentansprüche

1. Anlage zur biologischen Abwasserbehandlung und -nachbehandlung und zur Abwasserentsorgung aus isolierten Quellen am Entstehungsort umfassend einen biologischen Reaktor (1) zur biologischen Abwasserbehandlung und einen Filterapparat (2) zur Nachbehandlung von biologisch behandelten Abwässern, wobei der Filterapparat (2) eine Pumpenkammer (15) und einen Sedimentationsraum (33), einen Filtrationsraum (35) mit einem Filtrationsbett (37) mit durchlässigem Boden und mit einem Akkumulationsraum (55) für nachbehandeltes Wasser, der zwischen oberer Ebene des Filtrationsbetts (37) und einer Abflussöffnung (30) aus dem Filtrationsraum (35) angeordnet ist, umfasst;
eine Zuflussöffnung (26) für biologisch behandelte Abwässer aus dem biologischen Reaktor (1) und eine Abflussöffnung (77) zur Ableitung von Abwässern und Schlämmen aus Rückspülung des Filtrationsraumes (35) und Sedimentationsraumes (33) befinden sich im Sedimentationsraum (33) unter dem durchlässigen Boden (34) des Filtrationsbetts (37); maximale Höhe des Filtrationsbetts beträgt 30 cm;
die Abflussöffnung (77) wird über ein Verbindungsrohrleitung (25) an die Pumpenkammer (15) mit einer Saugöffnung (19) des Pumpapparates (17, 63) beim Boden der Pumpenkammer (15) angeschlossen und die Abflussöffnung (20) des Druckleitungs (18, 70) aus dem Pumpapparat (17, 63) wird in den biologischen Reaktor (1) geführt, wobei der biologische Reaktor (1) einen integrierten Retentionsraum (10) zum Ausgleichen und zur Retention von schwankenden Durchflüssen mittels einer Drosselöffnung (12) eines Durchflussreglers (11) am Abflussleitung (13) aus dem biologischen Reaktor (1) umfasst, und
wobei der Filterapparat (2) einen Wasserspeicherraum (36) umfasst, der mit dem Sedimentationsraum (33) über eine Öffnung (67) verbunden wird, wobei der Sedimentationsraum (33) und der Wasserspeicherraum (36) für das biologisch behandelte Abwasser bestimmt sind und der Filtrationsraum (35) für das nachbehandelte Wasser bestimmt ist.

2. Anlage zur biologischen Abwasserbehandlung und -nachbehandlung nach Anspruch 1, wobei die gemeinsame Apertur als Zuflussöffnung (26) und Abflussöffnung (77) zur Ableitung von Abwässern und Schlämmen aus Rückspülung des Sedimentationsraumes (33) und des Filtrationsraumes (35) dient.

3. Anlage zur biologischen Abwasserbehandlung und -nachbehandlung nach den Ansprüchen 1 oder 2, wobei der durchlässige Boden (34) des Filtrationsbetts (37) aus einem perforierten rostfreien Metallblech mit Maschenweite im Bereich von 0,3 bis 0,8 mm besteht.

4. Anlage zur biologischen Abwasserbehandlung und -nachbehandlung nach den Ansprüchen 1 bis 3, wobei der Höhe des Sedimentationsraumes (33) zwischen dem Boden (60, 23) und dem durchlässigen Boden (34) des Filtrationsbetts (37) 10-15 cm beträgt.

5. Anlage zur biologischen Abwasserbehandlung und -nachbehandlung nach den Ansprüchen 1 bis 4, wobei das Filtrationsbett (37) aus einem Sand mit Korngröße im Bereich von 0,3 bis 0,8 mm besteht und die Größe der Fläche des Filtrationsbetts (37) von der Filtrationsrate des Sandfilters im Bereich von 0,2 bis 0,4 m/Std. abgeleitet wird.

6. Anlage zur biologischen Abwasserbehandlung und -nachbehandlung nach den Ansprüchen 1 bis 5, wobei der Filterapparat (2) innerhalb des biologischen Reaktors (1) angeordnet wird oder der Filterapparat (2) im separaten Tank mit Seitenwänden (61), Boden (60) und Deckel (62) angeordnet wird.

7. Verfahren zur biologischen Abwasserbehandlung und -nachbehandlung umfassend eine Anlage nach den Ansprüchen 1 bis 6 so, dass das Rohabwasser im biologischen Reaktor (1) biologisch behandelt wird, das biologisch behandelte Abwasser vom Belebtschlamm getrennt wird und das biologisch behandelte Abwasser in tertiärer Nachbehandlungsstufe der Behandlung - im Filterapparat (2) nachbehandelt wird,
wobei während der Filtration das biologisch behandelte Abwasser ohne sedimentierende Partikel infolge des hydrostatischen Drucks des Wasserstandunterschieds im biologischen Reaktor (1) und des Wasserstands im Filtrationsraum (35) durch den durchlässigen Boden (34) des Filtrationsbetts (37) von unten nach oben durch das Filtrationsbett (37) mit einem Filtermaterial langsam steigt und die Reinigung des Filtrationsbetts (37) bei gleichzeitiger Haltung der mikrobiologischen Population des Filtrationsbetts (37) im Gleichgewicht durch wiederholte Rückspülung mit häufiger Aktivierung der Rückspülung tagsüber erfolgt und der Spülungsmechanismus so erfolgt, dass der Pumpapparat (17, 63) wiederholt in Gang gesetzt und an die Zuflussöffnung (26) im Sedimentationsraum (33) angeschlossen wird und der Wasserstand im Filtrationsraum (35) infolge des hydrostatischen Drucks durch das Filtrationsbett (37) sinken anfängt;
das langsam sinkende Wasser im Filtrationsbett (37) spült die abgestorbenen Bakterienreste und die aufgefangene Verschmutzung aus dem Filtrationsbett (37) durch den durchlässigen Boden (34) des Filtrationsbetts (37) in den Sedimentationsraum (33) und anschließend in die Pumpenkammer (15) aus, und wobei
bei der Rückspülung der Wasserstand durch das Filtrationsbett (37) langsamer und im Wasserspeicherraum (36) schneller sinkt; das langsam sinkende Wasser im Filtrationsbett (37) schafft milde Rückspülung des Filtrationsbetts (37) und der schnell sinkende Wasserstand im Wasserspeicherraum (36) verursacht schnelle Ausspülung des Sedimentationsraumes (33), und damit Entfernung des abgesetzten Schlamms und Rückspülungsschlamms in die Pumpenkammer (15).

8. Verfahren zur biologischen Abwasserbehandlung und -nachbehandlung nach Anspruch 7, wobei das biologisch behandelte Wasser aus dem biologischen Reaktor (1) in den Sedimentationsraum (33) mit gleichmäßigem Durchfluss zufließt, der kleiner ist als der Durchfluss des Abwasser- und Schlammpumpen aus der Rückspülung des Filterapparats (2) durch den Pumpapparat (17, 63).

9. Verfahren zur biologischen Abwasserbehandlung und -nachbehandlung nach den Ansprüchen 7 oder 8, wobei vor der Nachbehandlung der biologisch behandelten Abwässer wird das biologisch behandelte in den Sedimentationsraum (33) zufließende Abwasser physikalisch-chemisch oder chemisch behandelt.

## Revendications

1. Dispositif de traitement biologique et post-traitement des eaux usées et des eaux usées provenant de sources isolées au point d'origine contenant un réacteur (1) biologique pour le traitement biologique des eaux usées et un dispositif (2) de filtratge pour post-traitement des eaux usées biologiquement traitées où le dispositif (2) de filtrage contient une chambre (15) de pompage et une zone (33) de sédimentation, une zone (35) de filtrage avec un lit (37) de filtrage avec fond perméable et avec la zone (55) d'accumulation l'eau située entre le niveau supérieur du lit (37) de filtrage et la ouverture (30) de sortie de la zone (35) de filtrage;
la ouverture (26) d'entrée des eaux usées biologiquement traitées du réacteur (1) biologique et la ouverture (77) de sortie servant sur évacuation des eaux usées et des boues du rinçage à contre-courant de la zone (35) de filtrage et de la zone (33) de sédimentation sont situées dans la zone (33) de sédimentation en dessous du fond (34) perméable du lit (37) de filtrage; la hauteur maximale du lit de filtrage est de 30 cm;
la ouverture (77) de sortie est connectée par la ligne (25) de raccordement à la chambre (15) de pompage avec une ouverture (19) d'aspiration d'un dispositif (17, 63) de pompage au fond de la chambre (15) de pompage et la overture (20) de sortie de la ligne (18,70) chargée du dispositif (17,63) de pompage étant conduit dans le réacteur (1) biologique, dans lequel
le réacteur (1) biologique contient une zone (10) de rétention intégrée pour équilibrer et retenir des débits fluctuants en utilisant une ouverture (12) d'étranglement du régulateur (11) de débit au niveau dude la ligne (13) de sortie du réacteur (1) biologique et dans lequel le dispositif (2) de filtrage contient une zone (36) de stockage d'eau connectée à la zone (33) de sédimentation par une ouverture (67) dans laquelle la zone (33) de sédimentation et la zone (36) de stockage d'eau sont dédiées aux eaux usées biologiquement traitées et la zone (35) de filtrage est dédiée aux eaux usées post-traitées.

2. Dispositif de traitement biologique et post-traitement d'eaux usées selon la revendication 1 dans lequel une ouverture commune sert à la fois comme la ouverture (26) d'entrée et la ouverture (77) de sortie d'évacuation des eaux usées et des boues du rinçage à contre-courant de la zone (33) de sédimentation et de la zone (35) de filtrage.

3. Dispositif de traitement biologique et de post-traitement des eaux usées selon les revendications 1 ou 2 dans lequel le fond (34) perméable lit (37) de filtrage est formé par une tôle perforée en acier inoxydable avec un diamètre de maille compris entre 0,3-0,8 mm.

4. Dispositif de traitement biologique et de post-traitement des eaux usées selon les revendications 1 à 3 dans lequel la hauteur de la zone (33) de sédimentation entre le fond (60, 23) et le fond (34) perméable du lit (37) de filtrage est allant de 10 à 15 cm.

5. Dispositif de traitement biologique et de post-traitement d'eaux usées selon les revendications 1 à 4 dans lequel le lit (37) de filtrage est fait de sable avec une grosseur du grain de 0,3-0,8 mm et la taille de la surface lit (37) de filtrage est dérivée à partir de la vitesse de filtration du filtre à sable allant de 0,2 à 0,4 m/h.

6. Dispositif de traitement biologique et de post-traitement des eaux usées selon les revendications 1 à 5 dans lequel le dispositif (2) de filtrage est placé à l'intérieur d'un réacteur (1) biologique ou le dispositif (2) de filtrage est situé dans un réservoir séparé avec parois (61) latérales, fond (60) et couvercle (62).

7. Procédé de traitement biologique et post-traitement d'eaux usées utilisant un dispositif tel que défini par les revendications 1-6 tel que les eaux usées brutes sont biologiquement traitées dans un réacteur (1) biologique, les eaux usées biologiquement traitées sont séparées des boues activées et les eaux usées biologiquement traitées sont ensuite traitées dans la tertiaire, de post-traitement, étape du traitement - dans le dispositif (2) de filtrage, pendant la filtration, l'eaux biologiquement traitées sans particules sédimentantes monte lentement en raison de la pression hydrostatique de la différence entre le niveau d'eau à l'intérieur du réacteur (1) biologique et le niveau d'eau à l'intérieur de la zone (35) de filtrage à travers le fond (34) perméable du lit (37) de filtrage vers le haut à travers le lit (37) de filtrage avec un matériau de filtration et nettoyage du lit (37) de filtrage avec maintien parallèle des populations microbiennes du lit (37) de filtrage en équilibre est effectué par rinçage à contre-courant répété avec l'activation fréquente du rinçage à contre-courant en cours de journée et le mécanisme de rinçage est telle qu'un dispositif (17, 63) de pompage est déclenché de manière répétée et est connecté à une la ouverture (26) d'entrée de la zone (33) de sédimentation et au moyen de la pression hydrostatique le niveau d'eau dans la zone (35) de filtrage commence à descendre à travers le lit (37) de filtrage;
l'eau descendante lentement dans le lit (37) de filtrage lavé les restes de bactéries et de contaminants piégés du lit (37) de filtrage à travers le fond (34) perméable du lit (37) de filtrage dans la zone (33) de sédimentation et puis dans la chambre (15) de pompage, et dans lequel
lors du rinçage à contre-courant, le niveau d'eau descend plus lentement à travers lit (37) de filtrage en tombant plus rapidement dans la zone (36) de stockage; l'eau descendante lentement dans le lit (37) de filtrage assure un doux rinçage à contre-courant du lit (37) de filtrage tandis que le niveau d'eau descendante rapidement dans la zone (36) de stockage provoque un rinçage rapide de la zone (33) de sédimentation et donc éliminée boues décantées et boues du rinçage à contre-courant dans la chambre (15) de pompage.

8. Procédé de traitement biologique et post-traitement des eaux usées selon la revendication 7 dans lequel les eaux biologiquement traitées du réacteur (1) biologique arrivant dans la zone (33) de sédimentation à débit équilibré, inférieur au débit de pompage d'eaux usées et la boue du rinçage à contre-courant du dispositif (2) de filtrage par le dispositif (17, 63) de pompage.

9. Procédé de traitement biologique et de post-traitement des eaux usées selon les revendications 7 ou 8 dans lequel avant le post-traitement des eaux usées biologiquement traitées, les eaux usées biologiquement traitées arrivant dans la zone (33) de sédimentation sont physiquement et chimiquement traitées ou chimiquement traitées.
